# EUROPEAN PATENT SPECIFICATION

(11) **EP 0 450 752 B1**
(45) Date of publication and mention of the grant of the patent: **12.05.1999**
(21) Application number: 91301348.8
(22) Date of filing: 20.02.1991
(51) Int. Cl.: G06F 7/50, G06F 7/49

(54) **High speed mixed radix adders**
Schnelladdierer mit gemischter Basis
Additionneurs rapides en bases mixtes

(30) Priority: 02.04.1990 US 503818
(43) Date of publication of application: 09.10.1991
(73) Proprietor: ADVANCED MICRO DEVICES, INC., Sunnyvale, CA 94088-3453 (US)
(72) Inventor: Lynch, Thomas W., Austin, Texas 78722 (US); McIntyre, Steven D., Austin, Texas 78748 (US)
(74) Representative: Sanders, Peter Colin Christopher

(56) References cited:
- EP-A- 0 334 768
- US-A- 3 993 891
- IEEE JOURNAL OF SOLID-STATE CIRCUITS vol. 24, no. 5, October 1989, NEW YORK US pages 1317 - 1323 BENSCHNEIDER ET AL. 'A pipelined 50-MHz CMOS 64-bits floating-point arithmetic processor'
- ELECTRONIC DESIGN vol. 36, no. 19, 25 August 1988, HASBROUCK HEIGHTS, NEW JERSEY US page 32 PHILLIPS B. 'Adder algorithm speeds multiplication'
- PROCEEDINGS OF THE 18TH INTERNATIONAL SYMPOSIUM ON MULTIPLE-VALUED LOGIC May 1988, PALMA DE MALLORCA, SPAIN pages 294 - 299 MANZOUL ET AL. 'Quaternary logic for carry-lookahead binary addition'

## Description

The present invention relates to circuits for high speed digital electronic addition.

Related inventions are described in EP-A-0,450,755, EP-A-0,450,751 and EP-A-0,450,754.

In binary place value addition two operands, represented in the binary place value code, are summed to produce a result, also in binary place value code. Each operand, and the result, is an array of bits. In the binary place value code, the position of a bit in the array determines its power of two weight; hence value = sum (bit x 2^pos). The bit with the least weight in determining the value of a representation is called the least significant bit, or LSB. Similarly, the bit with the greatest weight is called the most significant bit, or MSB. Other number systems have better properties for addition, but they suffer from other problems, so virtually every computer on the market today uses the binary place value code.

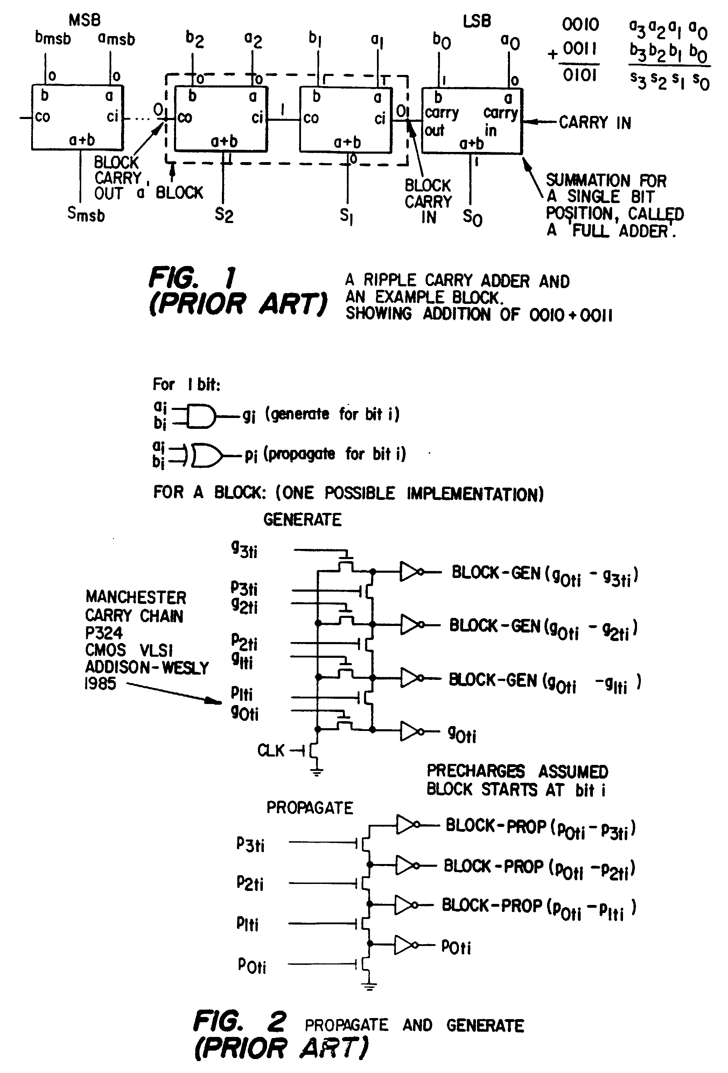

In the addition method done by hand, the sum is formed for the LSB position, a carry is possibly propagated to the next bit position, and the process is repeated for successive bit positions until each bit in the result has been calculated This method is know as 'ripple carry' addition to those skilled in the art, as shown in FIG. 1. Ripple carry addition is inherently slow because of its serial nature.

Traditionally, addition has been speeded up by using one of the following techniques, as described in CMOS VLSI Design, Addison-Wesley 1985: Carry look-ahead, Manchester Carry Lookahead, Binary Carry Lookahead trees, and Carry Select Addition. Another technique, as described in the 5th Annual symposium on Theoretical Aspects of Computer Science. STACS 1988, is Condition Sum Addition. Still another technique is the Multiple Output Domino Logic adder described in the 1988 Solid-State Circuits Conference Digest of Technical Papers.

Each of these adders, except the Carry Select, and the Conditional Sum Adder, is based on the concepts of carry propagation, carry generation, and carry kill (see FIG. 2); which are well understood by people skilled in the art. A carry is said to 'propagate' through a bit position if a carry into the summation operation for a given bit position is followed by a carry out of the given bit position, while the summation for the given bit position does not produce a carry out when no carry is input. A carry is said to be 'generated' from a given bit position if the summation for the given position produces a carry out independent of a carry in. A carry is said to be 'killed' in a bit position if a carry does not propagate through the bit. As known by people skilled in the art, and shown in FIG. 2, the propagate and generate signals may be found without actually doing the summation.

A grouping of adjacent sum functions, adjacent propagate functions, or adjacent generate functions, may be called a 'block', an example of which is shown in FIG. 1. The terms propagate, generate, and kill, may be applied to blocks. A carry is said to propagate through a given block if a carry into the given block's LSB summation is followed by a carry out of the given block's MSB summation. A block is said to generate a carry if the said block's MSB summation produces a carry out, independent of carries into the block's LSB. It is known by anyone skilled in the art that a block can only generate if a given bit position in the block generates and all bits between the given bit and the block's MSB propagate, as done in the Manchester Carry Chain described in CMOS VLSI, Addison Wesley, 1985.

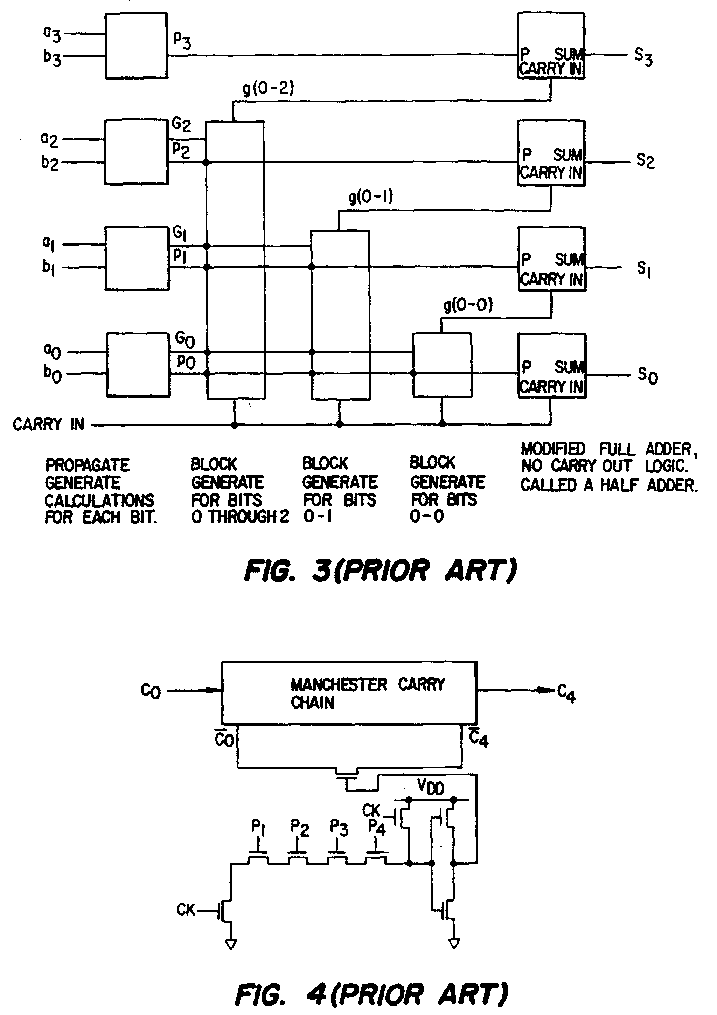

An overview of carry look-ahead adder theory is given in Digital Computer Arithmetic, by J.J.F. Cavanagh, p. 107-117, McGraw-Hill (1984). The CLA speeds computation of the carries by using redundant logic. A block is defined for a given bit position such that the LSB of the block corresponds to the LSB of the add, and the MSB of the block corresponds to the given bit position. Hence, there are as many blocks as there are bits positions in the result minus 1, as shown in FIG. 3. An additional block is needed if a carry out is required. Each block has only the input operands and the carry into the add as inputs, and one carry as an output. Theoretically, any single logic function may be performed in two gate delays, so the time to produce a sum in a carry lookahead adder is theoretically a constant four gate delays; however, the finite gain of real gates lifts the amount of load that any one gate can drive in a given amount of time, so more gate delays must be added. Also, since the input operands themselves are driven by gates, the number of carry blocks that can be driven, and hence the number of bits the result may have, is also limited. The carry lookahead adder becomes relatively slow for results having sizes beyond a few bits. The performance of the carry lookahead adders shows that loading considerations of real gates determines add time, not the theoretical number of gate delays. A recent adder invented by Ling, presented in the IBM Journal of Research and Development, May 1981, reduces the load from the output of the propage and generate state by one gate input per bit, per block Although this method alleviates the loading problem, the CLA adder remains relatively inefficient for adds of more than several bits.

The Manchester Carry Lookahead Adder, FIG. 4, speeds addition by allowing carries to skip blocks that propagate. To apply this method, an add is broken into a series of blocks, such that no carry propagation logic is duplicated. Then, all of the bit propagates for a given block are ANDed together to determine if the given block will propagate. If the block will propagate, then a bypass is turned on which will route any carries into the LSB of the block directly to the output of the block's MSB. This method works well for certain size adders in CMOS; however, its performance is still linearly related to the size of the add. In attempts to alleviate this problem multiple levels of skip are added, as explained in the IEEE Transactions on Computers Volume 36. For adds greater than 32 bits, this method can only approach the speed of a Binary Lookahead Carry adder, and it will be significantly slower than the adder being presented in this application because of theoretical and practical reasons.

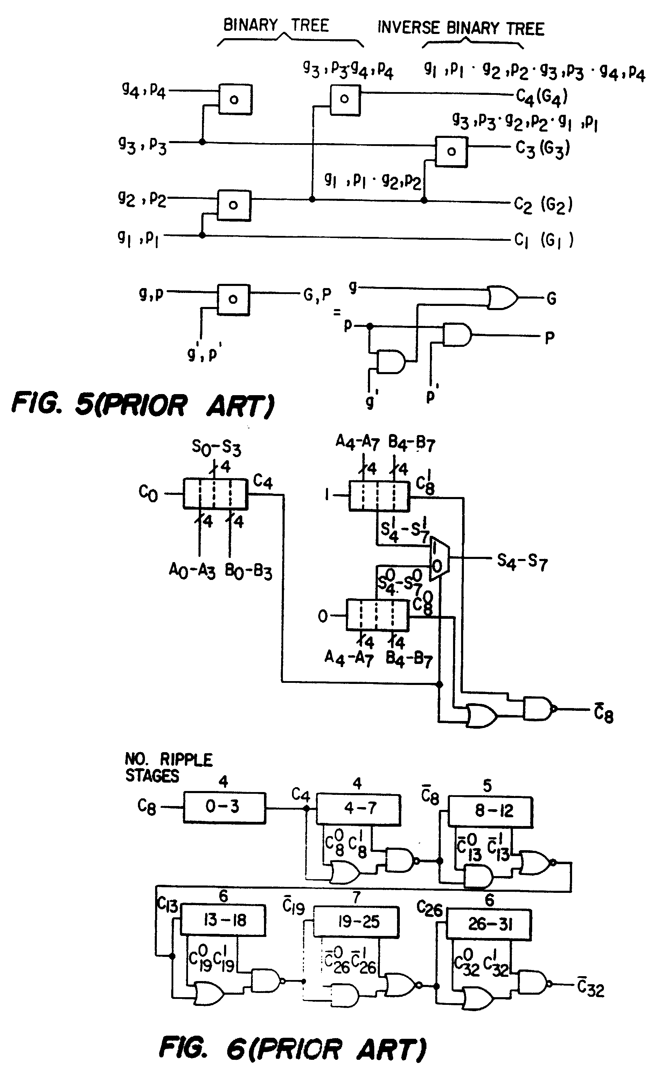

The Binary Lookahead Carry tree, FIG. 5 has gate delays related to the log base 2 the add length, plus overhead. of As in the case with the carry lookahead adder, circuit loading prevents the realization of the log base 2 gate delays for large trees, i.e., trees for adds bigger than about 8 bits. Also, as is known to anyone skilled in the art, the tree becomes large and inefficient to layout for large adds. The MODL gate adder, described in the 1988 IEEE Solid-State Circuits Conference Digest of Technical Papers, is an attempt to alleviate some of these problems and allows for a log base 2 x linear performance (less than log base 2) for larger adds.

A Carry Select Adder, shown in FIG 6, is based on the principle of partitioning the add into three blocks. The first block adds the bottom half of two operands. The second block adds the top half of the operands while assuming a carry in from the first block of zero. The third block adds the top half of the operands while assuming a carry in from the first block of one. When the carry from the first block is calculated it is used to pick the correct top half of the result by selecting the sum out of block two, or the sum out of block three via a two to one mux. When carry select adders are strung out in series they have linear performance related to the number of sections, plus the add time of the first section. For large adds, this type of adder is relatively slow, but it is small.

The Conditional Sum Adder is a recursively applied Carry Select Adder. An add is broken into many redundant blocks of two, then one set is picked so that only half as many possible sums remain. The process of halving the possible sums is continued in multiple stages until only the result remains. This adder has a log base 2 performance; however, it is even larger than the BLC adder. Since the summation is calculated along with the carries in each stage, the summation logic is unnecessarily reproduced many times. Also, the summation overhead makes this adder slower than the BLC adder.

Further examples of high speed adders and found in EP-A2-0,334,768, US-A-3,993,891 and Proceedings of the 18th International Symposium on Multiple- valued Logic, 24 - 26 May 1988, Palma De Mallorca, Spain; pages 294 - 299, Manzoul et al. 'Quaternary logic for carry- lookahead binary addition'.

According to a first aspect of the present invention there is provided a high speed adder for adding a first and second input operand, characterised by comprising: a first independent adder block, said first independent adder block having input means for receiving a total number of bits in said first and second operands and output means for outputting first sums of the total number of bits in said first and second input operands, said first independent adder block assuming a carry in of one; a second independent adder block in parallel with the first independent adder block, said second independent adder block having input means for receiving a total number of bits in said first and second operands and output means for outputting second sums of the total number of bits in said first and second input operands concurrently with the output of said first sums from said first independent adder block, said second independent adder block assuming a carry in of zero; carry prediction logic circuitry in parallel with said first independent adder block and said second independent adder block, said carry prediction logic circuitry producing carries for said first independent adder block and said second independent adder block and having an output for outputting said produced carries concurrently with said output of said first sums from said first independent adder block and concurrently with said output of said second sums from said second independent adder block; and a single adder multiplexer for receiving said outputs of said carry prediction logic circuitry, said first independent adder block and said second independent adder block, said multiplexer selecting the proper sums from said first sums produced by said first independent adder block and said second sums produced by said second independent adder block based upon said carries produced by said carry prediction logic circuitry.

According to a second aspect of the invention there is provided a method of effecting electronic digital addition of first and second operands, comprising the steps of: adding said first and second operands assuming a carry in of zero to obtain first sums of said first and second operand; concurrently adding said first and second operands assuming a carry in of one to obtain second sums of said first and second operand; concurrently producing predicted carries for said first and second sums with a radix 4 carry lookahead tree; inputting said first and second sums to a single adder multiplexer; and selecting with said single adder multiplexer a proper result based upon the first sums assuming a carry in of zero, the second sums assuming a carry in of one, and said predicted carries.

In a preferred embodiment of the invention, the single multiplexer operates on a sparse carry principle, rather than, for example, directly using carries. In addition, the carry prediction logic circuit preferably employs carry lookahead, carry skip, binary lookahead tree, carry select or radix 4 tree logic.

Accordingly, there is described a faster and/or less expensive adder, having relatively few gate delays. The adder circuit scales well, and uses relatively little space.

The adder circuit approaches the performance of a carry prediction block which operates on a fraction of the number of carry bits as the whole add.

In the accompanying drawings, by way of example only:-
FIGS. 1-6 are various prior configurations, previously discussed;
FIG. 7 is a block diagram of a system incorporating the present invention in parts thereof;
FIG. 8 is a block diagram of the processor shown in FIG. 7;
FIG. 9 is a more detailed block diagram of the processor of FIG. 8;
FIG. 10 is a block diagram of a floating point unit incorporating the present invention in parts thereof;
FIG. 11 is a block diagram of an adder circuit according to the teachings of the present invention;
FIG. 12 is a block diagram of a portion of the adder circuit of FIG. 11;
FIG. 13 is a block diagram of a portion of the adder circuit of FIG. 11; and
FIG. 14 is also a block diagram of a portion of the adder circuit of FIG. 11.

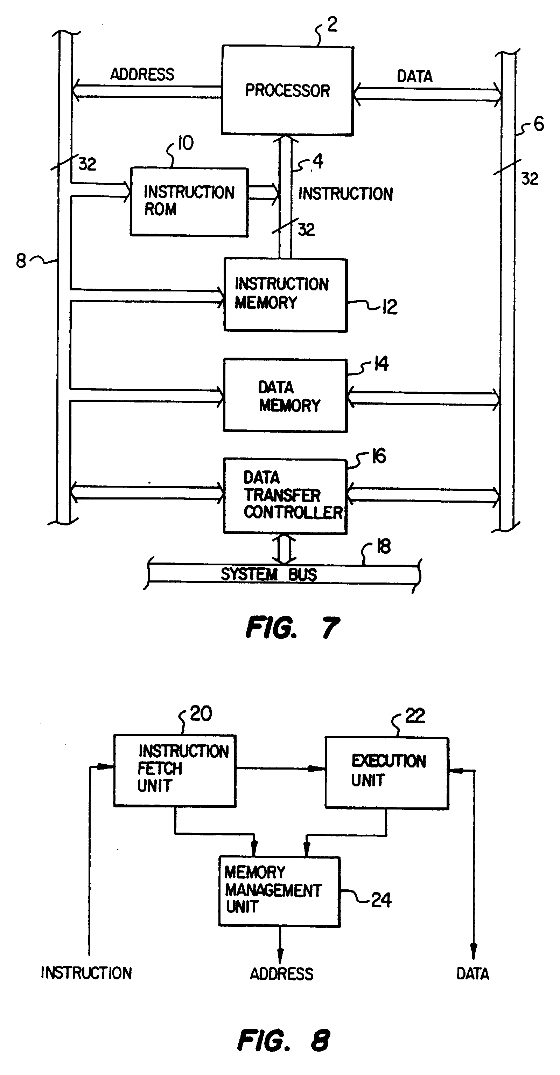

Referring now to FIG. 7, a simplified system diagram of a computing system including a processor 2 is shown therein. The purpose of this diagram, as well as several subsequent diagrams, is to illustrate an environment in which an adder according to the teachings of the present invention may be usefully incorporated.

Processor 2 accesses external instructions and data using three non-multiplexed buses. These buses may be referred to collectively as a channel. The channel comprises a 32-bit bus 4 for instruction transfers, a second 32-bit bus 6 for data transfers, and a third address bus 8 which is shared between instruction and data accesses. The address bus 8 is pipelined, so that it can be released before an instruction or data transfer is completed. This allows a subsequent access to begin before the first has completed, and allows the processor 2 to have two accesses in progress simultaneously.

The overall system shown in FIG. 7 may also be seen to comprise an instruction ROM 10 and instruction memory 12, both operatively connected between the address bus 8 and instruction bus 4. Additionally, a data memory 14 and data transfer controller 16 are shown to be operatively connected between the address bus 8 and data bus 6. Further, the data transfer controller 16 is also operatively connected so as to send signals onto, and receive signals from, a system bus 18.

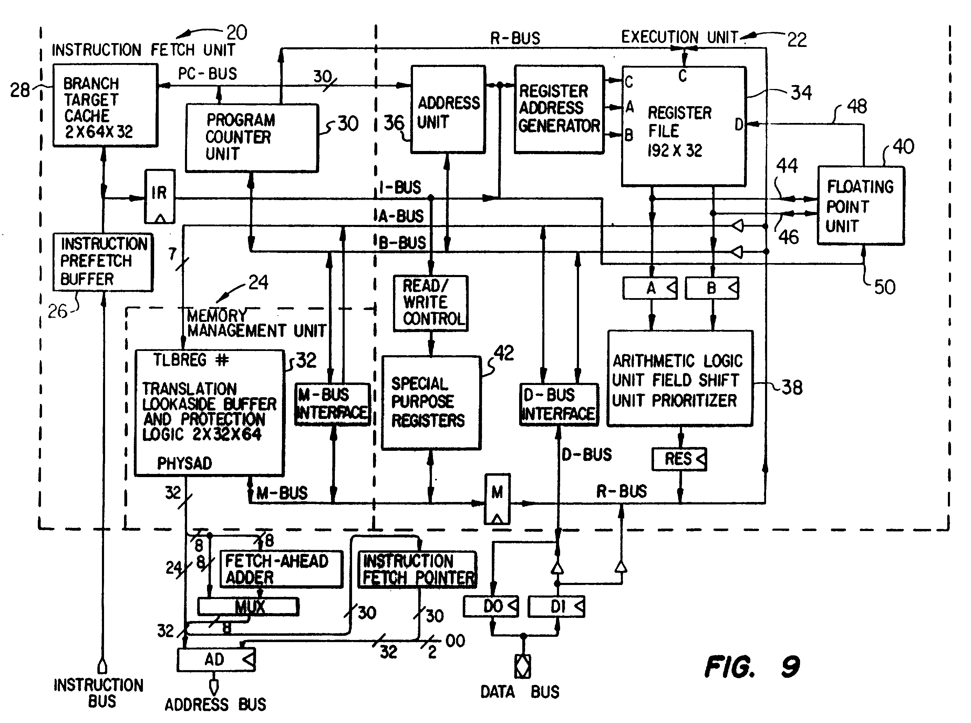

Referring now to FIG. 8, a data flow diagram of the processor 2 is shown therein so that a better understanding of that processor 2 may be obtained.

Processor 2 implements a four-stage pipeline for instruction execution, the four stages being "fetch", "decode", "execute" and "write-back". The instruction fetch unit 20 of processor 2 fetches instructions, and supplies instructions to other functional units. The unit 20 incorporates an instruction prefetch buffer, a branch target cache, and a program counter unit. These subunits will be discussed further below with reference to FIG. 9. All components of the instruction fetch unit 20 operate during the fetch stage of the processor pipeline.

Processor 2 also includes an execution unit 22. The execution unit 22 includes a register file, an address unit, an arithmetic/logic unit, a field shift unit, a prioritizer, and a floating point processing unit. These subunits, like the subunits of the instruction fetch unit 20, are also discussed further below with reference to FIG. 9. The register file and address unit operate during the decode stage of the pipeline. The arithmetic/logic unit, field shift unit, and prioritizer operate during the execute stage of the pipeline. The register file also operates during the write-back stage.

Still further with reference to FIG. 8, the processor 2 may be seen to include a memory management unit 24. The memory management unit 24 performs address translation and memory-protection functions for all branches, loads and stores. The unit 24 operates during the execute stage of the pipeline, so the physical address that it generates is available at the beginning of the write-back stage.

Interconnection of the units 20, 22 and 24 in processor 2, as well as their interfaces with system buses, are also shown in FIG. 8.

Referring now to FIG. 9, even further details regarding the subcomponents of the processor 2 are shown diagrammatically. As previously mentioned, the instruction fetch unit 20 my be seen to comprise an instruction prefetch buffer 26, a branch target cache 28, and a program counter unit 30. As also previously mentioned, the memory management unit 24 may be seen to comprise means 32 for performing address translation and memory protection functions for all branches, loads and stores. Finally, the execution unit 22 may be seen to comprise a register file 34, an address unit 36, an arithmetic/logic unit 38, a field shift unit (also designated by reference numeral 38), a prioritizer (also designated by reference numberal 38), and a floating point processing unit 40. Although various other elements (e.g., special purpose registers 42) and interconnection details are shown in FIG. 9, because they are only peripherally related to the present invention, and because the diagram alone is sufficiently communicative to those skilled in the art to understand processor 2 well, further details regarding all units other than the floating point unit 40 and other elements to which it is operatively connected are not set forth herein.

Several noteworthy aspects of the floating point unit 40 may be seen with reference to FIG. 9. Recognizing that the floating point unit 40 manipulates A and B operands, those A and B operands come from the register file 34 via A and B buses 44, 46, respectively. Results of manipulations, e.g., calculations, by the floating point unit 40 are written into the register file via result bus 48. Also, instructions for operation of the floating point unit 40 are transmitted thereto via processor instruction bus 50.

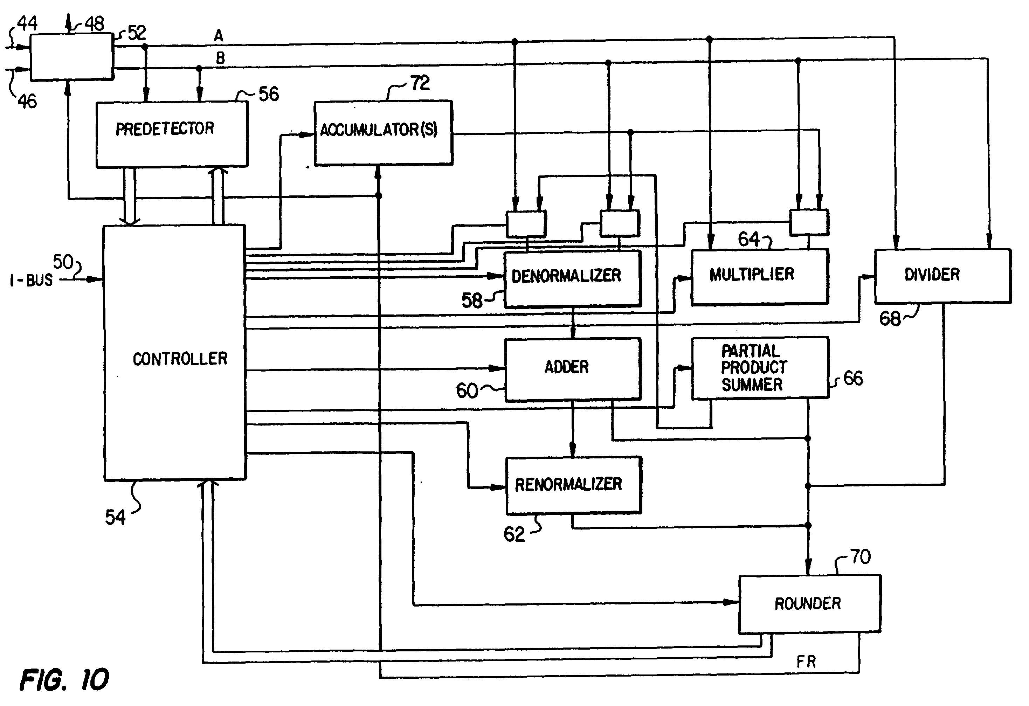

Referring now to Fig. 10, various subcomponents of a pipelined floating point processing unit constructed in accordance with the teachings of the present invention may now be seen.

The various interface points discussed above with reference to FIG. 9 are similarly shown and labelled in this FIG., i.e., operands from the register file are fed into the floating point unit via A and B buses 44, 46, results leave the floating point unit via the result bus 46, and instructions are transmitted to the floating point unit via the instruction or I-bus 50. With special reference to FIG. 10, the A bus, B bus and result bus may be seen to be operatively connected to an interface unit 52 within the floating point unit, whereas the I-bus is operatively connected to a controller 54 therein.

It is well-known that when numbers for processing, i.e., A and B operands, are input to a floating point unit such as floating point unit 40, the floating point unit performs the desired (or instructed) arithmetic operations, and outputs the result on a result bus such as bus 48. Floating point units such as floating point unit 40 may process both floating point and integer numbers. Various floating point formats may be supported, such as 32 bit (single precision), and 64 bit (double precision). Additionally, the floating point unit 40 may handle conversion of integers to floating point, and the reverse, as well as support IEEE, DEC and IBM formats Each of the above aspects of floating point unit 40 is discussed further in the related cases referred to above and incorporated herein by reference.

Referring still further to FIG. 10, those skilled in the art should appreciate the function and operation of most of the various floating point unit subcomponents shown therein. Those subcomponents which operate in a generally conventional individual manner, and are thus not discussed in detail herein, include predetector 56, denormalizer 58, multifunction unit 60, renormalizer 62, multiplier 64, partial product summer 66, divider 68, rounder 70, and accumulator(s) 72. Some very important aspects of these subcomponents and the interaction thereof exist however, and are discussed at length in the related cases, to which the reader is urged to refer.

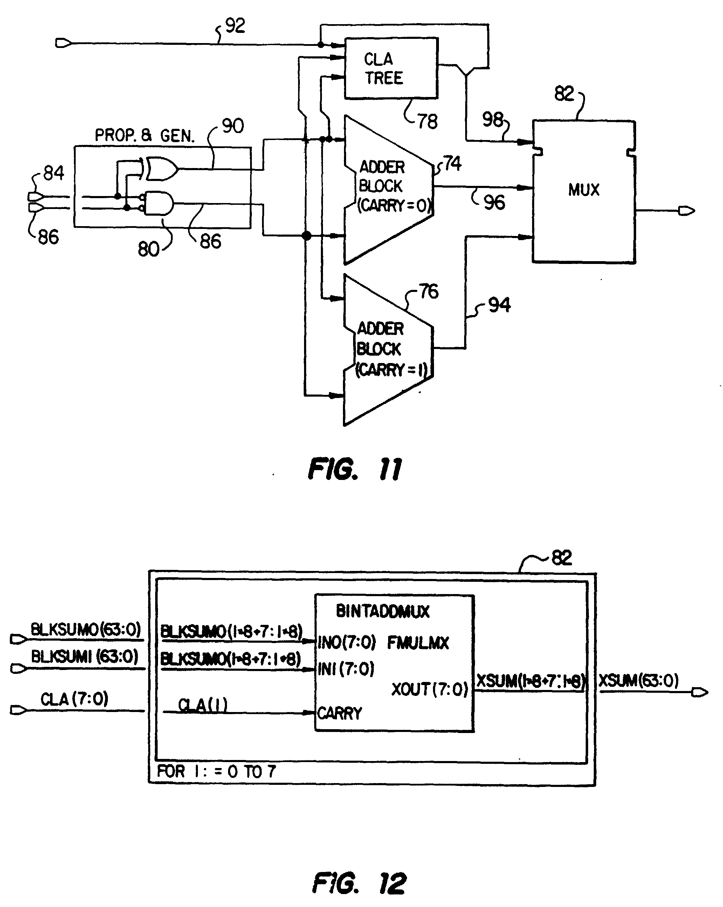

Referring now to FIG. 11, a block diagram of an adder according to the teachings of the present invention is shown therein. As should he appreciated by those skilled in the art, the adder shown in FIG. 11 may be incorporated into the multifunction unit 60, multiplier 64, and/or divider 68 of the floating point unit shown in FIG. 10. Additionally, the adder shown in FIG. 11 may be seen to comprise at least one first adder block 74, at least one second adder block 76, a carry prediction block 78, for example a carry lookahead tree, a propagate and generate block 80, and a mux 82, each of which is discussed in further detail below.

Referring first to the propagate and generate block 80, as should be well understood by those skilled in the art, this block 80 generates propagate and generate signals, as appropriate, based upon input operands.

Continuing to refer to FIG. 11, it may be seen that the propagate and generate signals produced by block 80 are transmitted to blocks 78, 74 and 76 of the adder. In the carry prediction block 78, an embodiment of which is discussed at length in a related case cited above, those two signals are combined with the carry input of the adder, provided on line 92, to produce carries for the block boundaries.

Since only carries on the block boundaries are required from the prediction logic, the prediction logic is simpler and has less internal loading. This less internal loading, according to the teachings of this patent, will allow the carry prediction circuit to approach its theoretical maximum speed. In addition, because only the block boundary carries are required from the prediction logic, the prediction logic will be substantially smaller; hence, according to the teachings of this patent, the prediction logic will be able to produce carries in theoretically less time as well.

In the embodiment of the invention shown in FIG 11, adder blocks 74 and 76 are virtually identical sets of 8 independent adders with a small number of inputs. An important difference, however, between adder block 74 and adder block 76 is that the former block assumes a carry in of zero (0) and the latter block assumes a carry in of one (1). The results of all of the independent adders may be seen in FIG. 7 to be forwarded from the adder blocks 74 and 76 to the mux 82 via lines 94 and 96. Additionally, the carry lookahead tree signal is also forwarded to mux 82 via line 98.

Block 82 is a mux that picks the correct result from the various adders. That is, if a carry in of zero would be appropriate, the result of block 74 would be picked by mux 82; and if a carry in of 1 would have been correct, the mux 82 picks the output result of block 76. In an embodiment of the present invention employing 8 independent adders in each of blocks 74 and 76, a mux that would perform satisfactorily would be an 8 x [(1 of 2) x 8] mux.

Based on the foregoing, those skilled in the art should see that the adder blocks (74 and 76) may evaluate simultaneously with the very fast carry prediction block (78), so add times are either 1 mux delay plus the very fast carry prediction block, or the add time at the slowest chain in the summation blocks. Those skilled in the art should appreciate that this is a very fast adder. An embodiment of the present invention along the lines of FIG. 11 has been constructed and has been found to be faster and less expensive than prior art configurations. Additionally, the constructed circuit has few gate delays: log4 n + 2. Additionally, the constructed configuration may be easily scaled and it does not use too much area. In fact, it tends to use less than 450 microns, in an old 1 u micron CMOS process, for 64 bits to perform 4.0 nanoseconds adds.

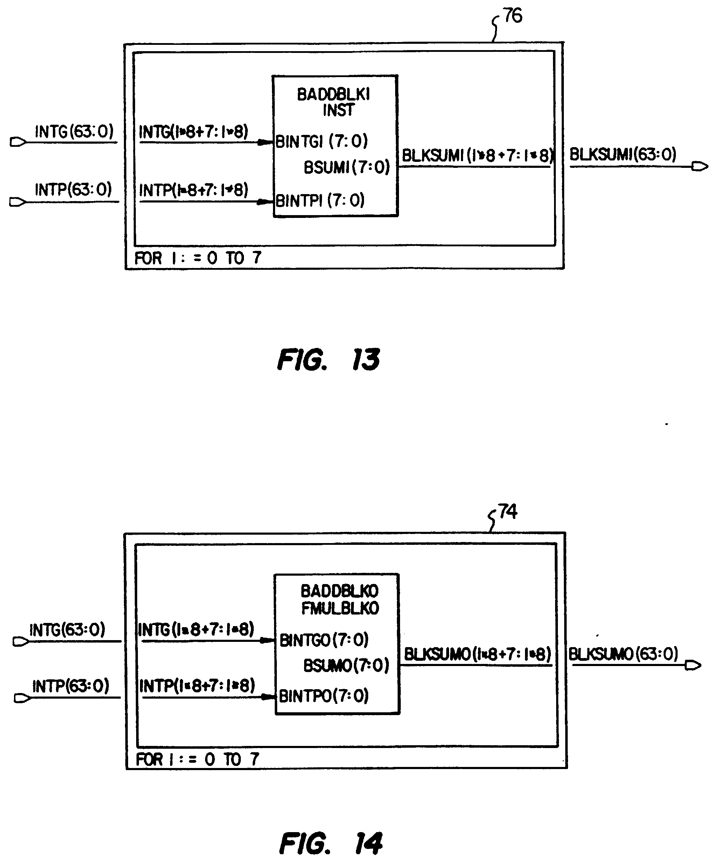

To assist those skilled in the art in fully understanding the present invention, in FIGS. 12, 13 and 14, further details regarding blocks 82, 76 and 74, respectively, are presented. The various signal configurations shown in FIGS. 12-14 correspond to signals actually employed in a product made by the assignee of the present invention, specifically, the AM29050. As those skilled in the art should now fully appreciate, FIG. 12 shows an 8 x [(1 of 2) x 8] mux block FIG. 13 shows an 8 bit adder assuming a carry in a 1. Of course, the notation at the bottom of this FIG. indicates that in embodiments of the present invention there would be 8 such adders forming an adder block 76. Similarly, FIG. 14 shows an 8 bit adder assuming a carry in of zero and in an embodiment of the present invention there may be 8 such adders in an adder block 74.

Based on the foregoing, those skilled in the art should appreciate that the present invention provides a high speed adder that offers tremendous advantages over the present art. These advantages include speed, low cost, few gate delays, scaleability, and use of small area. In a specific embodiment of the present invention shown and described herein, a fast radix 4 carry lookahead tree evaluates at the same time that pairs of 8 bit adders evaluate. Each adder pair contains an adder that assumes a carry in of 1 and one with a carry in of zero. A final mux picks the correct result.

The present invention may be generalized to any number n bits.

## Claims

1. A high speed adder for adding a first and second input operand, characterised by comprising:
a first independent adder block (76), said first independent adder block having input means for receiving a total number of bits in said first and second operands and output means for outputting first sums of the total number of bits in said first and second input operands, said first independent adder block assuming a carry in of one;
a second independent adder block (74) in parallel with the first independent adder block, said second independent adder block having input means for receiving a total number of bits in said first and second operands and output means for outputting second sums of the total number of bits in said first and second input operands concurrently with the output of said first sums from said first independent adder block, said second independent adder block assuming a carry in of zero;
carry prediction logic circuitry (78) in parallel with said first independent adder block (76) and said second independent adder block (74), said carry prediction logic circuitry producing carries for said first independent adder block and said second independent adder block and having an output for outputting said produced carries concurrently with said output of said first sums from said first independent adder block and concurrently with said output of said second sums from said second independent adder block; and
a single adder multiplexer (82) for receiving said outputs of said carry prediction logic circuitry, said first independent adder block and said second independent adder block, said multiplexer (82) selecting the proper sums from said first sums produced by said first independent adder block and said second sums produced by said second independent adder block based upon said carries produced by said carry prediction logic circuitry.

2. A high speed adder as recited in claim 1, wherein there is a plurality of first adder units in said first independent adder block and wherein there is a plurality of second adders in said second independent adder block.

3. A high speed adder as recited in claim 2, wherein there are eight first adder units in said first independent adder block.

4. A high speed adder as recited in any one of the claims 1-3, wherein said multiplexer (82) operates on a sparse carry principle.

5. A high speed adder as recited in any one of the preceding claims, wherein said carry prediction logic circuitry employs carry lookahead, carry skip, binary lookahead tree, carry select or radix 4 tree logic.

6. A high speed adder as recited in any one of the claims 1-4, wherein said carry prediction logic circuitry employs radix 4 tree logic.

7. A high speed adder as recited in claim 1 and further comprising means (80) for producing propagating and generate signals, said means for producing propagate and generate signals having input means for receiving said input operands and output means for transmitting said propagate and generate signals to said carry prediction logic circuitry, said first independent adder block and said second independent adder block.

8. A high speed adder as recited in claim 1 wherein said carry prediction logic circuitry (78) comprises:
a plurality of substantially similar subcircuits;
each of said subcircuits having at least four input terminals, at least two output terminals, and an internal logic circuit;
each of said subcircuits being connected in multi-stages to form a three level tree with at least fourteen subcircuits on a first level, four subcircuits on a second level, and two subcircuits on a third level;
each of said subcircuits on said first level operable to produce block propagate and generate terms for four inputs on its input terminals;
three of said subcircuits on said second level connected in circuit to receive the block propagate and generate terms produced by four subcircuits on said first level and to produce block propagate and generate terms therefrom;
the fourth of said subcircuits on said second level connected in circuit to receive the block propagate and generate terms produced by at least two subcircuits on said first level;
one of said subcircuits on said third level connected in circuit to receive the block propagate and generate terms produced by the subcircuits on said second level and to produce block propagate and generate terms therefrom; and
the other of said subcircuits on said third level connected in circuit to receive signals relating to carries from two of said subcircuits on said second level and to further make those signals available as output therefrom.

9. A method of effecting electronic digital addition of first and second operands, comprising the steps of:
adding said first and second operands assuming a carry in of zero to obtain first sums of said first and second operand;
concurrently adding said first and second operands assuming a carry in of one to obtain second sums of said first and second operand;
concurrently producing predicted carries for said first and second sums with a radix 4 carry lookahead tree;
inputting said first and second sums to a single adder multiplexer; and
selecting with said single adder multiplexer a proper result based upon the first sums assuming a carry in of zero, the second sums assuming a carry in of one, and said predicted carries.

10. A method as recited in claim 9, wherein said plurality of adders assuming a carry in of one comprises eight adders.

11. A method as recited in claim 10, wherein said single adder multiplexer comprises an 8 x [(1 of 2) x 8] multiplexer.

12. A method as recited in claim 9, wherein said input operands are comprised of blocks of bits and wherein the step of concurrently producing predicted carries for said first and second sums comprises the step of predicting carries for said input operand bits corresponding to boundaries of said blocks.

## Patentansprüche

1. Hochgeschwindigkeits-Addierer zum Addieren eines ersten und eines zweiten Eingangs-Operanden, gekennzeichnet durch:
einen ersten unabhängigen Addier-Block (76) mit einer Eingabeeinrichtung zum Empfang einer gesamten Anzahl von Bits der ersten und zweiten Operanden und einer Ausgabeeinrichtung zum Ausgeben erster Summen der gesamten Anzahl von Bits der ersten und zweiten Eingangs-Operanden, wobei der erste unabhängige Addier-Block einen Übertrag von Eins annimmt;
einen dem ersten unabhängigen Addier-Block parallelen zweiten unabhängigen Addier-Block (74) mit einer Eingabeeinrichtung zum Empfang einer gesamten Anzahl von Bits der ersten und zweiten Operanden und einer Ausgabeeinrichtung zum Ausgeben zweiter Summen der gesamten Anzahl von Bits der ersten und zweiten Eingangs-Operanden gleichzeitig mit der Ausgabe der ersten Summen aus dem ersten unabhängigen Addier-Block, wobei der zweite unabhängige Addier-Block einen Übertrag von Null annimmt;
eine dem ersten unabhängigen Addier-Block (76) und dem zweiten unabhängigen Addier-Block (74) parallele Übertrags-Vorhersage-Logikschaltung (78), die Überträge für den ersten unabhängigen Addier-Block und den zweiten unabhängigen Addier-Block erzeugt und einen Ausgang aufweist, um die erzeugten Überträge gleichzeitig mit der Ausgabe der ersten Summen aus dem ersten unabhängigen Addier-Block und gleichzeitig mit der Ausgabe der zweiten Summen aus dem zweiten unabhängigen Addier-Block auszugeben; und
einen Einfach-Addier-Multiplexer (82) zum Empfangen der Ausgangssignale der Übertrags-Vorhersage-Logikschaltung, des ersten unabhängigen Addier-Blocks und des zweiten unabhängigen Addier-Blocks, wobei der Multiplexer (82) auf der Basis der von der Übertrags-Vorhersage-Logikschaltung erzeugten Überträge die korrekten Summen aus den von dem ersten unabhängigen Addier-Block erzeugten ersten Summen und den von dem zweiten unabhängigen Addier-Block erzeugten zweiten Summen wählt.

2. Hochgeschwindigkeits-Addierer nach Anspruch 1, bei dem der erste unabhängige Addier-Block mehrere erste Addier-Einheiten enthält und der zweite unabhängige Addier-Block mehrere zweite Addier-Einheiten enthält.

3. Hochgeschwindigkeits-Addierer nach Anspruch 2, bei dem der erste unabhängige Addier-Block acht erste Addier-Einheiten enthält.

4. Hochgeschwindigkeits-Addierer nach einem der Ansprüche 1-3, bei dem der Multiplexer (82) gemäß einem Spärlich-Übertrags-Prinzip arbeitet.

5. Hochgeschwindigkeits-Addierer nach einem der vorhergehenden Ansprüche, bei dem die Übertrags-Vorhersage-Logikschaltung eine Übertrags-Vorhersage-, Übertrags-Übersprungs-, Binär-Vorhersagebaum-, Übertrags-Wähl- oder Wurzel-4-Baum-Logik verwendet.

6. Hochgeschwindigkeits-Addierer nach einem der Ansprüche 1-4, bei dem die Übertrags-Vorhersage-Logikschaltung eine Wurzel-4-Baum-Logik verwendet.

7. Hochgeschwindigkeits-Addierer nach Anspruch 1, ferner mit einer zum Erzeugen von Ausbreitungs- und Erzeugungssignalen vorgesehenen Einrichtung (80) mit einer Eingabeeinrichtung zum Empfangen der Eingangs-Operanden und einer Ausgabeeinrichtung zum Übertragen der Ausbreitungs- und Erzeugungssignale an die übertrags-Vorhersage-Logikschaltung, den ersten unabhängigen Addier-Block und den zweiten unabhängigen Addier-Block.

8. Hochgeschwindigkeits-Addierer nach Anspruch 1, bei dem die Übertrags-Vorhersage-Logikschaltung (78) aufweist:
mehrere im wesentlichen gleiche Unterschaltungen;
wobei jede der Unterschaltungen mindestens vier Eingangsanschlüsse, mindestens zwei Ausgangsanschlüsse und eine interne Logikschaltung aufweist;
wobei jede der Unterschaltungen mehrstufig derart geschaltet ist, daß ein Drei-Ebenen-Baum mit mindestens vierzehn Unterschaltungen auf einer ersten Ebene, vier Unterschaltungen auf einer zweiten Ebene und zwei Unterschaltungen auf einer dritten Ebene gebildet ist,
wobei jede der Unterschaltungen auf der ersten Ebene zum Erzeugen von Block-Ausbreitungs- und -Erzeugungs-Termen für vier Eingangssignale an seinen Eingangsanschlüssen betreibbar ist;
wobei drei der Unterschaltungen auf der zweiten Ebene derart zusammengeschaltet sind, daß sie die von vier Unterschaltungen auf der ersten Ebene erzeugten Block-Ausbreitungs- und -Erzeugungs-Terme empfängt und daraus Block-Ausbreitungs- und -Erzeugungs-Terme erzeugt;
wobei die vierte der Unterschaltungen auf der zweiten Ebene derart geschaltet ist, daß sie die von mindestens zwei Unterschaltungen auf der ersten Ebene erzeugten Block-Ausbreitungs- und -Erzeugungs-Terme empfängt;
wobei eine der Unterschaltungen auf der dritten Ebene derart geschaltet ist, daß sie die von den Unterschaltungen auf der zweiten Ebene erzeugten Block-Ausbreitungs- und -Erzeugungs-Terme empfängt und daraus Block-Ausbreitungs- und -Erzeugungs-Terme erzeugt;
wobei die andere der Unterschaltungen auf der dritten Ebene schaltungsmäßig derart angeschlossen ist, daß sie auf Überträge von zweien der Unterschaltungen auf der zweiten Ebene bezogene Signale empfängt und ferner diese Signale als Ausgangssignale dieser Unterschaltungen verfügbar macht.

9. Verfahren zum Durchführen elektronischer digitaler Addition eines ersten und eines zweiten Operanden, mit den folgenden Schritten:
Addieren der ersten und zweiten Operanden unter Annahme eines Übertrags von Null, um erste Summen der ersten und zweiten Operanden zu errechnen;
gleichzeitiges Addieren der ersten und zweiten Operanden unter Annahme eines Übertrags von Eins, um zweite Summen der ersten und zweiten Operanden zu errechnen;
gleichzeitiges Erzeugen vorhergesagter Überträge für die ersten und zweiten Summen mit einem Wurzel-4-Übertrags-Vorhersage-Baum;
Eingeben der ersten und zweiten Summen in einen Einfach-Addier-Multiplexer; und
mittels des Einfach-Addier-Multiplexers, Wählen eines korrekten Ergebnisses basierend auf den ersten Summen unter Annahme eines Übertrags von Null, den zweiten Summen unter Annahme eines Übertrags von Eins, und den vorhergesagten Überträgen.

10. Verfahren nach Anspruch 9, bei dem die mehreren Addierer, die einen Übertrag von Eins annehmen, acht Addierer aufweisen.

11. Verfahren nach Anspruch 10, bei dem der Einfach-Addier-Multiplexer einen 8 x [(1 von 2) x 8] - Multiplexer aufweist.

12. Verfahren nach Anspruch 9, bei dem die Eingangs-Operanden Blocks von Bits aufweisen und bei dem der Schritt des gleichzeitigen Erzeugens vorhergesagter Überträge für die ersten und zweiten Summen einen Schritt aufweist, in dem Überträge für die Eingangs-Operanden-Bits entsprechend Begrenzungen der Blöcke vorhergesagt werden.

## Revendications

1. Additionneur à haute vitesse servant à ajouter un premier et un second opérandes d'entrée, caractérisé en ce qu'il comprend :
un premier bloc additionneur indépendant (76),ledit premier bloc additionneur indépendant comportant des moyens d'entrée pour recevoir un nombre total de bits dans lesdits premier et second opérandes et des moyens de sortie pour délivrer les premières sommes du nombre total de bits dans lesdits premier et second opérandes d'entrée, ledit premier bloc additionneur indépendant supposant un report de un ;
un second bloc additionneur indépendant (74) en parallèle avec le premier bloc additionneur indépendant, ledit second bloc additionneur indépendant comportant des moyens d'entrée pour recevoir un nombre total de bits dans lesdits premier et second opérandes et des moyens de sortie pour délivrer les secondes sommes du nombre total de bits dans lesdits premier et second opérandes d'entrée simultanément à la sortie desdites premières sommes venant dudit premier bloc additionneur indépendant, ledit second bloc additionneur indépendant supposant un report de zéro ;
circuit logique de prédiction de report (78) placé en parallèle audit premier bloc additionneur indépendant (76) et audit second bloc additionneur indépendant (74), ledit circuit logique de prédiction de report produisant des reports pour ledit premier bloc additionneur indépendant et ledit second bloc additionneur indépendant et comportant une sortie pour délivrer lesdits reports produits en même temps que ladite sortie desdites premières sommes venant dudit premier bloc additionneur indépendant et en même temps que ladite sortie desdites secondes sommes venant dudit second bloc additionneur indépendant ; et
un seul multiplexeur des additionneurs (82) servant à recevoir lesdites sorties dudit circuit logique de prédiction de report, dudit premier bloc additionneur indépendant et dudit second bloc additionneur indépendant, ledit multiplexeur (82) sélectionnant les sommes correctes à partir desdites premières sommes produites par ledit premier bloc additionneur indépendant et desdites secondes sommes produites par ledit second bloc additionneur indépendant sur la base desdits reports produits par ledit circuit logique de prédiction de report.

2. Additionneur à haute vitesse selon la revendication 1, dans lequel il existe une pluralité de premières unités d'additionneur dans ledit premier bloc additionneur indépendant et dans lequel il existe une pluralité de seconds additionneurs dans ledit second bloc additionneur indépendant.

3. Additionneur à haute vitesse selon la revendication 2, dans lequel il y a existe huit premières unités d'additionneur dans ledit premier bloc additionneur indépendant.

4. Additionneur à haute vitesse selon l'une quelconque des revendications 1 à 3, dans lequel ledit multiplexeur (82) fonctionne sur un principe de report peu fréquent.

5. Additionneur à haute vitesse selon l'une quelconque des revendications précédentes, dans lequel ledit circuit logique de prédiction de report utilise un report avec regard en avant, un saut de report, un arbre binaire à report avec regard en avant, une sélection de report ou une logique d'arbre à base 4.

6. Additionneur à haute vitesse selon l'une quelconque des revendications 1 à 4, dans lequel ledit circuit logique de prédiction de report utilise une logique d'arbre à base 4.

7. Additionneur à haute vitesse selon la revendication 1 et comprenant, de plus, des moyens (80) pour produire des signaux de création et de propagation, lesdits moyens pour produire les signaux de création et de propagation comportant des moyens d'entrée pour recevoir lesdits opérandes d'entrée et des moyens de sortie pour transmettre lesdits signaux de création et de propagation audit circuit logique de prédiction de report , audit premier bloc additionneur indépendant et audit second bloc additionneur indépendant.

8. Additionneur à haute vitesse selon la revendication 1, dans lequel ledit circuit de logique de prédiction de report (78) comprend :
une pluralité de sous-circuits essentiellement semblables ;
chacun desdits sous-circuits comportant au moins quatre bornes d'entrée, au moins deux bornes de sortie et un circuit logique interne,
chacun desdits sous-circuits étant connecté en plusieurs étapes pour former un arbre à trois niveaux comportant au moins quatorze sous-circuits sur un premier niveau, quatre sous-circuits sur un second niveau et deux sous-circuits sur un troisième niveau ;
chacun desdits sous-circuits sur ledit premier niveau pouvant fonctionner pour produire des termes de production et de propagation de bloc pour les quatre entrées sur ses bornes d'entrée ;
trois desdits sous-circuits sur ledit second niveau étant connectés en circuit pour recevoir les termes de production et de propagation de bloc produits par quatre sous-circuits sur ledit premier niveau et pour produire à partir de là des termes de production et de propagation de bloc ;
le quatrième desdits sous-circuits sur ledit second niveau étant connecté en circuit pour recevoir les termes de création et de propagation de bloc produits par au moins deux sous-circuits sur ledit premier niveau ;
l'un desdits sous-circuits sur ledit troisième niveau étant connecté en circuit pour recevoir les termes de production et de propagation de bloc produits par les sous-circuits sur ledit second niveau et pour produire à partir de là les termes de création et de propagation de bloc ; et
l'autre desdits sous-circuits sur ledit troisième niveau étant connecté en circuit pour recevoir des signaux concernant des reports provenant de deux desdits sous-circuits sur ledit second niveau et pour rendre, de plus, ces signaux disponibles en tant que sortie de ce niveau.

9. Procédé consistant à effectuer une addition numérique électronique d'un premier et d'un second opérandes comprenant les étapes consistant à :
ajouter lesdits premier et second opérandes supposant un report de zéro pour obtenir des premières sommes desdits premier et second opérandes ;
ajouter simultanément lesdits premier et second opérandes en supposant un report de un pour obtenir des secondes sommes desdits premier et second opérandes ;
produire simultanément des reports prédits pour lesdites première et seconde sommes avec un arbre à report avec regard en avant de base 4 ;
introduire lesdites première et seconde sommes dans le seul multiplexeur des additionneurs ; et
sélectionner avec lesdit seul additionneur-multiplexeur un résultat correct sur la base des premières sommes supposant un report de zéro, des secondes sommes supposant un report de un, et desdits reports prédits.

10. Procédé selon la revendication 9, dans lequel ladite pluralité d'additionneurs supposant un report de un comprend huit additionneurs.

11. Procédé selon la revendication 10, dans lequel le seul multiplexeur des additionneurs comprend un multiplexeur 8 x [(1 de 2) x 8 ].

12. Procédé selon la revendication 9, dans lequel lesdits opérandes d'entrée sont constitués de blocs de binaires et dans lequel l'étape consistant à produire simultanément des reports prédits pour lesdites première et seconde sommes comprend l'étape consistant à prédire des reports pour lesdits bits d'opérandes d'entrée correspondant aux frontières desdits blocs.
